(19) Europäisches Patentamt / European Patent Office / Office européen des brevets

(11) **EP 2 753 896 B1**

(12) **EUROPÄISCHE PATENTSCHRIFT**

(45) Veröffentlichungstag und Bekanntmachung des Hinweises auf die Patenterteilung:
**30.09.2020  Patentblatt 2020/40**

(21) Anmeldenummer: **13753413.7**

(22) Anmeldetag: **27.06.2013**

(51) Int Cl.:
**G01B 11/245** *(2006.01)*    **G01B 11/25** *(2006.01)*

(86) Internationale Anmeldenummer:
**PCT/DE2013/200023**

(87) Internationale Veröffentlichungsnummer:
**WO 2014/000738 (03.01.2014 Gazette 2014/01)**

(54) **VERFAHREN ZUR BILDERFASSUNG EINER VORZUGSWEISE STRUKTURIERTEN OBERFLÄCHE EINES OBJEKTS UND VORRICHTUNG ZUR BILDERFASSUNG**

METHOD FOR CAPTURING IMAGES OF A PREFERABLY STRUCTURED SURFACE OF AN OBJECT AND DEVICE FOR IMAGE CAPTURE

PROCÉDÉ DE PRISE DE VUES D'UNE SURFACE DE PRÉFÉRENCE STRUCTURÉE D'UN OBJET, ET DISPOSITIF DE PRISE DE VUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012   DE 102012211381**

(43) Veröffentlichungstag der Anmeldung:
**16.07.2014   Patentblatt 2014/29**

(73) Patentinhaber: **INB Vision AG**
**39118 Magdeburg (DE)**

(72) Erfinder:
 • **LILIENBLUM, Erik**
   **39114 Magdeburg (DE)**
 • **MICHAELIS, Bernd**
   **39175 Biederitz (DE)**

 • **WAGNER, Robert**
   **94127 Neuburg am Inn (DE)**
 • **LILIENBLUM, Tilo**
   **39120 Magdeburg (DE)**
 • **SCHMIDT, Wolfram**
   **06463 Stadt Falkenstein (DE)**

(74) Vertreter: **Patent- und Rechtsanwälte Ullrich & Naumann**
**PartG mbB**
**Schneidmühlstrasse 21**
**69115 Heidelberg (DE)**

(56) Entgegenhaltungen:
**EP-A1- 2 287 593          DE-A1-102007 022 361**
**DE-A1-102007 034 689   DE-A1-102008 009 680**
**JP-A- 2004 117 186         US-A- 4 834 530**
**US-A1- 2003 160 970**

**Beschreibung**

Die Erfindung betrifft ein Verfahren zur Bilderfassung einer vorzugsweise strukturierten Oberfläche eines Objekts sowie eine entsprechende Vorrichtung, vorzugsweise zur Nutzung des Verfahrens. Der Begriff "strukturierte Oberfläche" ist im weitesten Sinne zu verstehen und umfasst neben planen Flächen auch dreidimensionale Oberflächen, beispielsweise geformte Oberflächen und Oberflächen mit Textur. Der Begriff "Bilderfassung" ist im Sinne von "Bild- und Formerfassung" zu verstehen, insbesondere im Sinne einer 3D-Erfassung.

Bei dem erfindungsgemäßen Verfahren handelt es sich grundsätzlich um ein optisches Messverfahren. Solche optischen Messverfahren gewannen in den letzten Jahren an Bedeutung. Besonders im Nahbereich hat die 3D-Messtechnik als besonderes Messverfahren einen hohen Entwicklungsstand erreicht.

Bekannt ist eine Vielzahl von Verfahren zur Oberflächenvermessung, die in unterschiedlichsten Applikationen eingesetzt werden. Für die flächenhafte 3D-Vermessung mit hoher Präzision sind neben unterschiedlichen Laserscannverfahren [S. Son, H. Park, K. H. Lee: Automated laser scanning system for reverse engineering and inspection. International Journal of Machine Tools and Manufacture, Volume 42, Issue 8, June 2002, Seiten 889-897] und dem Lichtschnitt [Shirai, Yoshiaki und Motoi Suwa: Recognition of Polyhedrons with a Range Finder. In: Cooper, D. C. (Herausgeber): Proceedings of the 2nd International Joint Conference on Artificial Intelligence, (London, UK, September, 1971), Conference Proceedings, Seiten 80-87, 1971] vor allem photogrammetrische Mehrschrittverfahren mit aktiver Streifenprojektion, wie das Phaseshifting [Lilienblum E., Michaelis, B.: Optical 3d surface reconstruction by a multi-period phase shift method. Journal of Computers (JCP), 2(2):73-83, April 2007] oder die Zeitkorrelation [Albrecht, Peter ; Michaelis, Bernd: Improvement of the Spatial Resolution of an Optical 3-D Measurement Procedure. In: IEEE Transactions on Instrumentation and Measurement Bd. 47. Brisbane, 1998, S. 158-162] sowie Einschrittverfahren, wie die Flächenkorrelation [Kanade, T. ; Okutomi, M.: A stereo matching algorithm with an adaptive window: theory and experiment. In: IEEE Transactions on Pattern Analysis and Machine Intelligence 16 (1994), Nr. 9, S. 920 - 932] bekannt.

Grundlage zum Erreichen hoher Messgenauigkeiten ist im Allgemeinen die Verwendung strukturierten Lichts [Valkenburg, R. J. ; McIvor, A. M.: Accurate 3d measurement using a structured light system. In: Image and Vision Computing 16 (1998), Nr. 2, S. 99-110]. Mehrschrittverfahren erreichen räumliche Genauigkeiten von bis zu 1/10000 der Messobjektgröße [Wiora, G.:Optische 3D-Messtechnik: Präzise Gestaltvermessung mit einem erweiterten Streifenprojektionsverfahren, University Heidelberg, Dissertation, 2001]. Der aktuelle Markt der Streifenprojektionssysteme ist durch mehrere Systemhersteller und eine Vielzahl von Produkten gekennzeichnet. Es existiert auch eine Reihe von Druckschriften, die die zuvor genannten klassischen Stereo-Vision-Systeme betreffen. Lediglich beispielhaft seien dazu die DE 197 38 480 C1, DE 44 02 414 C2 und DE 199 28 341 C2 genannt. Diesen Systemen ist gemein, dass sie Matrixkamerasysteme und Projektoren bzw. Lasertechnik zur Erzeugung des Beleuchtungslichts verwenden.

Des Weiteren zeigen die US 4 834 530 A, die DE 10 2007 034689 A1 und die JP 2004 117186 A Verfahren und Vorrichtungen zur Bilderfassung strukturierter Oberflächen mittels mehrerer Zeilenkameras bei gleichzeitiger Musterprojektion.

Um größere Flächen bei gleich bleibendem Anspruch an die Genauigkeit zu vermessen, müssen bei allen bekannten, auf der Verwendung Matrixkameras basierenden Systemen mehrere Messaufnahmen nacheinander durchgeführt werden. Für ausgewählte Anwendungen ist hierfür eine robotergestützte Messtechnik verfügbar. Im Allgemeinen wird einfache Translation und Rotation mit entsprechenden Vorrichtungen genutzt. Unabhängig von der eingesetzten Methode entstehen Probleme insbesondere dann, wenn es sich um große Teile bzw. Flächen handelt. Für jede Messaufnahme muss die Bewegung des Aufnahmesystems gestoppt werden (Stopp-and-Go-Betrieb). Die Stopp-and-Go Problematik führt bedingt durch das unvermeidliche Ausschwingen des Aufnahmesystems zu einer erheblichen Zeitverzögerung. Außerdem erhöhen die Start- und Stoppvorgänge die Standzeit bzw. reduzieren die Start- und Stoppvorgänge die Haltbarkeit/Lebensdauer der 3D-Messtechnik und führen zu einer erhöhten Abnutzung aller mechanischen Komponenten. Desweiteren treten Probleme durch Vignettierung und spekulare Reflexion auf. Für einen industriellen Einsatz ist die existierende Technik nur bedingt geeignet.

Ein weiterer Nachteil bei bekannten mehrschrittigen Verfahren (z.B. Phasenshift oder Zeitkorrelation), die auf dem Einsatz von Matrixkameras basieren, ist die hohe Integrations- und Auslesezeit bei der Bildaufnahme. Dies führt im Allgemeinen zu Messzeiten von über 50 ms, wodurch insbesondere bei Schwingungen der Messobjektoberfläche von über 10 Hz in Abhängigkeit zur Schwingungsamplitude erhebliche systematische Messfehler auftreten. Dies ist insbesondere im industriellen Produktionsprozess, z.B. in einem Presswerk oder bei der Messung von Endlosmaterialien, problematisch.

Der vorliegenden Erfindung liegt nun die Aufgabe zugrunde, ein Verfahren zur Bilderfassung einer vorzugsweise strukturierten Oberfläche eines Objekts anzugeben, wonach bei reproduzierbarer Genauigkeit in kürzester Zeit eine Oberflächenaufnahme möglich ist. Das Verfahren soll sich vor allem auch zur Anwendung bei Endlosmessungen eignen. Ebenso ist eine entsprechende Vorrichtung anzugeben.

Die voranstehende Aufgabe ist durch die Merkmale der unabhängigen Patentansprüche 1 und 12 gelöst.

Das erfindungsgemäße Verfahren zur Bilderfassung einer vorzugsweise strukturierten Oberfläche eines Objekts ist im Patentanspruch 1 beschrieben.

Die erfindungsgemäße Vorrichtung ist im Patentanspruch 12 beschrieben.

Neuartig an der vorliegenden Erfindung ist die Konstruktion eines aktiven optischen 3D-Messsystems mit Zeilenkameras. Die Erfindung basiert auf der Konstruktion eines speziellen Zeilenkamerasystems zur Bilderfassung bei statischer oder zeitveränderlicher Projektion geeigneter Lichtmuster. Grundlage zur Oberflächenrekonstruktion ist die zeitabhängige Definition einer Abbildungsfunktion, die unter Berücksichtigung der räumlichen Bewegungen von Kamera und Messobjekt für jeden erfassten Bildpunkt einen Sehstrahl im Messvolumen liefert. Zur Definition der Abbildungsfunktion ist eine spezielle Kalibrierung für Zeilenkameras erforderlich. Dies basiert z.B. auf einem Kalibrierfeld mit nicht parallel zur Zeile angeordneten Linien, mit unterschiedlichem Winkel auf unterschiedlichen Höhen, aus denen u.a. die geometrische Position der Kamera ermittelbar ist. Hierzu sei angemerkt, dass durch Aufnahme des Kalibrierfeldes in unterschiedlichen Positionen durch die Zeilenkameras die Linien an charakteristischen Punkten im Kamerabild erscheinen. Aus diesen Punkten kann sowohl eine zeitabhängige als auch eine statische Definition abgeleitet werden.

Unter Verwendung dieser Definition können durch räumliche oder zeitliche Auswertung der aufgenommenen Bilder korrespondierende Bildpunkte gefunden werden, die zusammen mit der zeitabhängigen Abbildungsfunktion eine Triangulation von 3D-Oberflächenpunkten ermöglichen. Geeignete Algorithmen zur Suche der korrespondierenden Bildpunkte können sehr unterschiedlich sein. Sie hängen ab von der Konstruktion des Kamerasystems, von der Bewegung des Kamerasystems, von der Bewegung des Messobjektes und von der Anzahl und Art der projizierten Muster.

Für bestimmte Anwendungen bietet der Einsatz von Zeilenkameras mit strukturierter Beleuchtung für die 3D-Vermessung von Oberflächen im Vergleich zu anderen Messverfahren erhebliche Vorteile. Die strukturierte Beleuchtung macht das Messverfahren unabhängig von einer Textur auf der Objektoberfläche. Damit unterscheidet sich das Verfahren von passiven Ansätzen, also von Verfahren ohne strukturierte Beleuchtung. Die Verwendung von Zeilenkameras anstelle von Matrixkameras ermöglicht es, die Oberfläche abzuscannen. Dies erlaubt die Anwendung auf Endlosprozesse bei sich kontinuierlich bewegenden Oberflächen z.B. bei Bandmaterial, sowie die effiziente Vermessung rotationssymmetrischer Teile, z.B. Wellen oder sich drehende Objekte wie bei der Vermessung von Seitenwänden von Reifen.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 12 nachgeordneten Patentansprüche und andererseits auf die nachfolgende Erläuterung bevorzugter Ausführungsbeispiele der Erindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1   in einer schematischen Ansicht, teilweise, ein Ausführungsbeispiel der grundsätzlichen Anordnung einer erfindungsgemäßen Vorrichtung, die das erfindungsgemäße Verfahren nutzt, am Beispiel eines Kamerasystems mit zwei Zeilenkameras,

Fig. 2   in einer schematischen Ansicht, teilweise, ein Ausführungsbeispiel der grundsätzlichen Anordnung einer erfindungsgemäßen Vorrichtung, die das erfindungsgemäße Verfahren nutzt, am Beispiel eines Kamerasystems mit mehreren Zeilenkameras,

Fig. 3   in einer schematischen Ansicht, teilweise, ein Ausführungsbeispiel einer erfindungsgemäßen Vorrichtung mit parallel angeordneten, programmierbaren Projektoren als Lichtquellen,

Fig. 4   in einer schematischen Ansicht, teilweise, ein Ausführungsbeispiel einer erfindungsgemäßen Vorrichtung mit parallel angeordneten statischen Projektoren als Lichtquellen,

Fig. 5   in einer schematischen Ansicht, teilweise, ein Ausführungsbeispiel einer erfindungsgemäßen Vorrichtung, wobei dort die Lichtmuster durch Lichtspots erzeugt werden,

Fig. 6   in einer schematischen Ansicht, teilweise, ein Ausführungsbeispiel einer erfindungsgemäßen Vorrichtung, wobei dort ein einzelner Lichtspot generiert wird,

Fig. 7   in einer schematischen Ansicht, teilweise, ein Ausführungsbeispiel einer erfindungsgemäßen Vorrichtung, wobei dort unter Anordnung mehrerer Reihen von Lichtspots überdeckende Lichtspotmuster erzeugt werden, und

Fig. 8   in einer schematischen Ansicht ein insgesamt dargestelltes Ausführungsbeispiel einer erfindungsgemäßen Vorrichtung, wobei dort ein Sensorsystem mit Spotbeleuchtung vorgesehen ist.

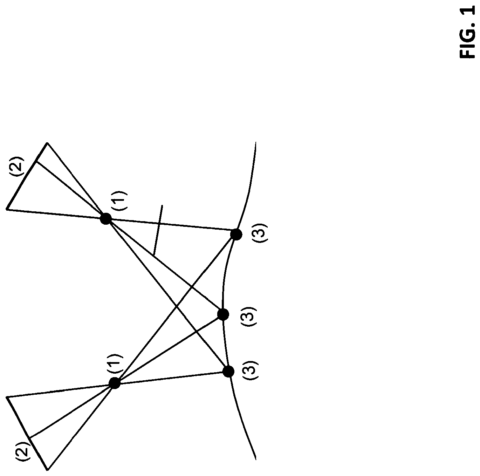

Die Fig. 1 bis 8 zeigen unterschiedliche Ausgestaltungen der erfindungsgemäßen Lehre, einerseits in Bezug auf die erfindungsgemäße Vorrichtung und andererseits in Bezug auf das erfindungsgemäße Verfahren. Wesentlich ist hierbei, dass zur Bilderfassung einer Oberfläche eines Objekts (es kann sich dabei um eine glatte Oberfläche oder aber auch um eine strukturierte 3D-Oberfläche bzw. Oberfläche mit Textur handeln) mindestens zwei Zeilenkameras verwendet werden, nämlich zum Scannen der Oberfläche des Objekts. Die Oberfläche wird strukturiert beleuchtet. Es findet eine zeitliche und räumliche Auswertung der aufgenommenen Bilder unter Berücksichtigung einer Relativbewegung zwischen den Zeilenkameras und der Oberfläche statt, nämlich zum Zwecke der bildhaften und/oder dimensionellen Rekonstruktion der Oberfläche.

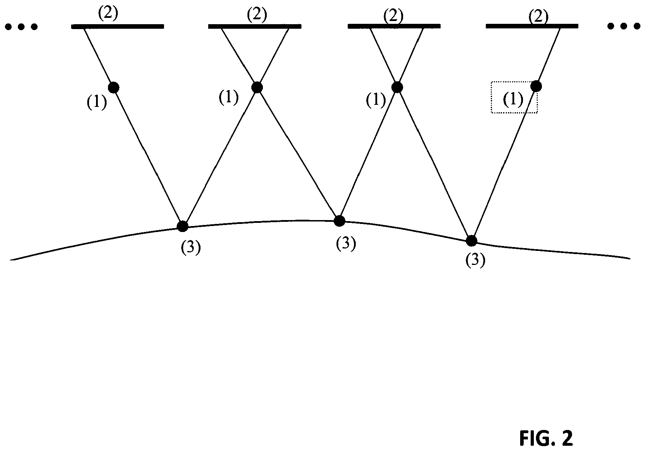

Die Effizienz des Verfahrens bezüglich Rechenzeit und Messgenauigkeit hängt entscheidend von der Konstruktion des Kamerasystems ab. Bei Verwendung von Systemen mit zwei oder mehreren Kameras ist es von Vorteil, die Kameras kollinear auszurichten, wie es in den Fig. 1 und 2 beispielhaft dargestellt ist. Die Projektionszentren 1 und die Sensorzeilen 2 aller im System befindlichen Zeilenkameras spannen dabei eine gemeinsame Ebene auf. Korrespondierende Bildpunkte, d.h. Pixel, die denselben Oberflächenpunkt 3 abbilden, werden durch die kollineare Ausrichtung immer zum selben Zeitpunkt erfasst. Bei gleicher Zeilenfrequenz und gleicher Startzeit aller Kameras befinden sich korrespondierende Bildpunkte immer in der gleichen Bildzeile. Hierdurch lassen sich die Algorithmen zur Suche korrespondierender Bildpunkte erheblich vereinfachen. Bei zeitveränderlicher Projektion von Lichtmustern ermöglicht dies außerdem, die zeilenweise Änderung der Lichtmuster in zwei Kameras miteinander ortsgebunden zu korrelieren. Hierfür werden Grauwertfolgen einzelner Bildspalten mit bekannten Korrelationsfunktionen ausgewertet. Abweichungen von der Kollinearität des Kamerasystems führen entweder zu Messfehlern oder sie müssen im Algorithmus zur Suche korrespondierender Punkte separat berücksichtigt werden.

Zur kollinearen Ausrichtung ist es möglich, mit den Kameras ein geeignetes gemeinsames Muster aufzunehmen. Durch iterative Anpassung der Kameraorientierung werden die Kameras so eingestellt, dass beide Kameras das Muster an der gleichen Position aufnehmen. Das Muster muss eine eindeutige Charakteristik senkrecht zur Zeilenrichtung haben. Die Oberfläche, auf der sich das Muster befindet, sollte eine dreidimensionale Ausprägung besitzen. Ein solches Muster kann durch aktive Beleuchtung oder Textur auf dem aufgenommenen Objekt erzeugt werden. Für die Ausrichtung kann auch das Kalibrierfeld verwendet werden.

Eine konkrete Möglichkeit zur Suche korrespondierender Bildpunkte bei zeitveränderlicher Projektion von Lichtmustern und kollinearer Ausrichtung der Kameras besteht darin, die mittelwertfreie Kreuzkorrelation anzuwenden. Es seien $G$ und $G'$ zwei verschiedene Bilder des Zeilenkamerasystems und es seien $r_i = G(u, v + i)$ und $s_i = G'(u', v + i)$ Grauwerte dieser Bilder wobei $u$ und $u'$ bei entsprechender horizontaler Subpixelinterpolation auch reellwertig sein dürfen. Dann ergibt sich bei $n$ unterschiedlichen Musterprojektionen mit

$$K(u, u', v) = \frac{\sum_{i=1}^{n}(r_i - \overline{r})(s_i - \overline{s})}{\sqrt{\sum_{i=1}^{n}(r_i - \overline{r})^2 \cdot \sum_{i=1}^{n}(s_i - \overline{s})^2}}$$

ein Korrelationskoeffizient, der die Ähnlichkeit der Pixel $G(u,\overline{v})$ und $G'(u',\overline{v})$ angibt (mit $\overline{r}$, $\overline{s}$ und $\overline{v}$ sind die jeweiligen Mittelwerte bezeichnet). Die beiden Pixel sind genau dann korrespondierende Bildpunkte wenn der Korrelationskoeffizent maximal wird. Durch Triangulation kann daraus direkt ein Tiefenwert in Bezug auf des Kamerasystem berechnet werden. Eine vertikale Subpixelinterpolation kann wegen der Kollinearität der Kameras entfallen.

Bei sinusförmigen Lichtmustern kann im Rahmen eines weiteren Ausführungsbeispiels der Korrelationskoeffizient auch über die Phasenverschiebung entsprechend der Verwendung beim Phasenshiftverfahren berechnet werden. Es sei der Phasenwinkel für eine Grauwertfolge $q = (q_1, q_2, ..., q_n)$ mit

$$\varphi(q) = \arctan_2\left(\sum_{i=1}^{n}\cos\left(\tfrac{2\pi i}{n}\right)q_i, \sum_{i=1}^{n}\sin\left(\tfrac{2\pi i}{n}\right)q_i\right)$$

definiert. Dann ergibt sich unter Berücksichtigung der Phasensprünge der gesuchte Korrelationskoeffizient mit

$$K(u, u', v) = \frac{1}{2\pi}\max\{|\varphi(s) - \varphi(r)|, 2\pi - |\varphi(s) - \varphi(r)|\}$$

Um für die Oberflächenrekonstruktion eine maximale laterale Auflösung (Flächenauflösung) zu gewährleisten, sollte die Scangeschwindigkeit bzw. die Zeilenfrequenz so gewählt werden, dass die vertikale Auflösung (in Scanrichtung) in etwa dem $n$-fachen der horizontale Auflösung (in Zeilenrichtung) entspricht. Dadurch wird gewährleistet, dass sich die ortliche Scannposition verglichen mit der Pixelgröße über alle $r_i$ bzw. $s_i$ nicht wesentlich ändert.

Prinzipiell ist das erfindungsgemäße Messverfahren mit jeder Art von strukturiertem Licht anwendbar. Allerdings ist die Messgeschwindigkeit von der Zeilenfrequenz und damit von der Lichtintensität sowie der Projektion schnell wechselnder Mustersequenzen abhängig. Als weitere Ausführung wird zur strukturierten Beleuchtung eine dezentrale Musterprojektion in drei unterschiedlichen Varianten wie folgt vorgeschlagen:

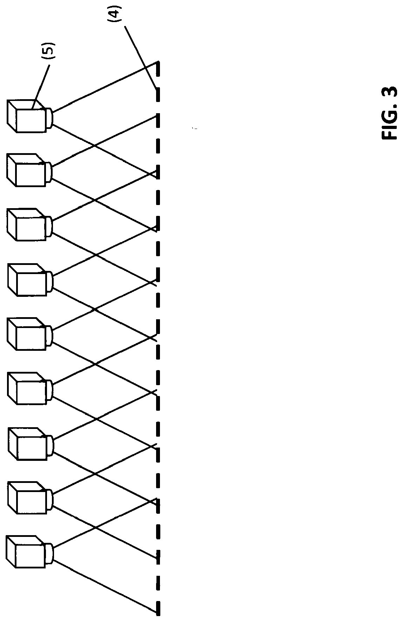

(i) Es werden mehrere programmierbare Musterprojektoren 5 parallel betrieben, wie das in Fig. 3 dargestellt ist. Durch Überlagerung und eine geringe Vergrößerung kann die Lichtintensität der projizierten Muster auf der Objektoberfläche 4 gesteigert werden. Um eine hohe Messgeschwindigkeit zu erreichen müssen die programmierbaren Projektoren 5 in der Lage sein, entsprechend schnelle Musterfolgen zu generieren.

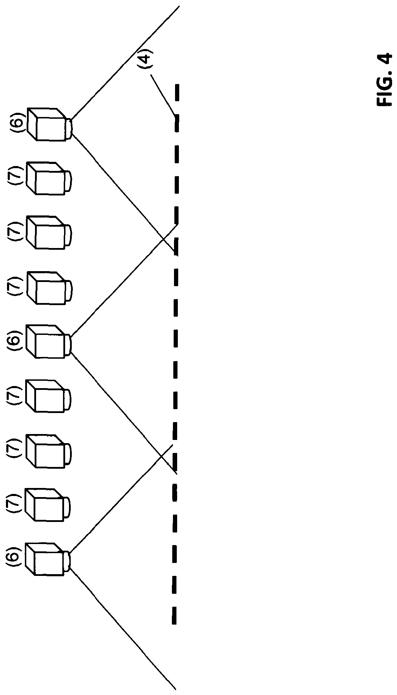

(ii) Es werden mehrere statische Musterprojektoren parallel betrieben. Im Unterschied zu (i) werden hier unterschiedliche Lichtmuster durch an- bzw. abschalten einzelner Projektoren erzeugt. In Fig. 4 wird das Lichtmuster 4 auf der Objektoberfläche durch einige eingeschaltete Projektoren 6 erzeugt. Alle anderen Projektoren 7 sind ausgeschaltet, erzeugen also kein Lichtmuster. Werden die Projektoren 6 ausgeschaltet und dafür von den anderen Projektoren 7 einige eingeschaltet, dann können andere Muster generiert werden. Um eine hohe Messgeschwindigkeit zu erreichen, müssen die Projektoren entsprechend schnell schaltbar sein.

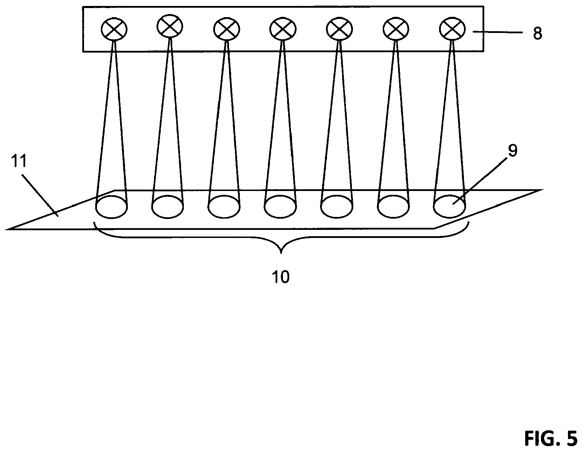

(iii) Die benötigten Muster werden aus einzelnen Lichtspots zusammengesetzt. In Fig. 5 ist eine Beleuchtung 8 dargestellt, die aus einer Anzahl von Lichtspots 9 ein Lichtmuster 10 auf der Messobjektoberfäche 11 erzeugt. Prinzipiell ist die Konstruktion nicht an die Art der Spoterzeugung gebunden.

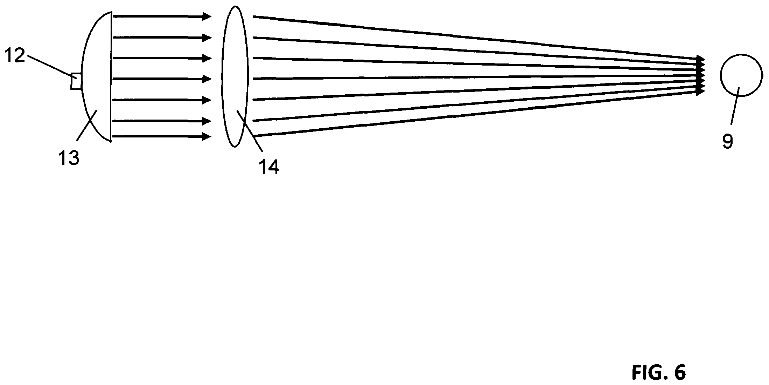

In Fig. 6 ist als Ausführungsbeispiel dargestellt, wie die Erzeugung eines LED-Lichtspots erfolgen kann, wobei das Licht einer LED 12 über einen Reflektor 13 und eine Optik 14 auf einen einzelnen Lichtspot 9 fokussiert wird.

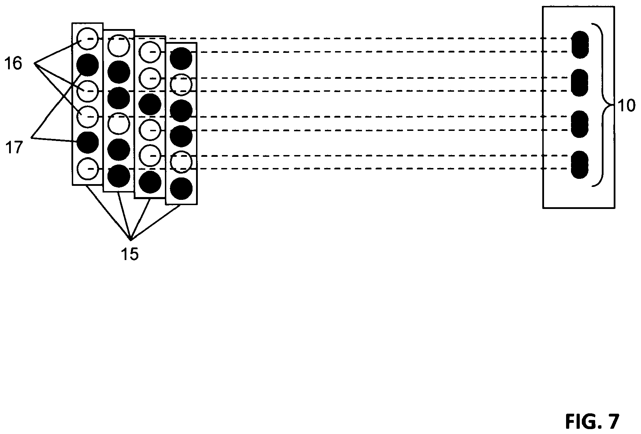

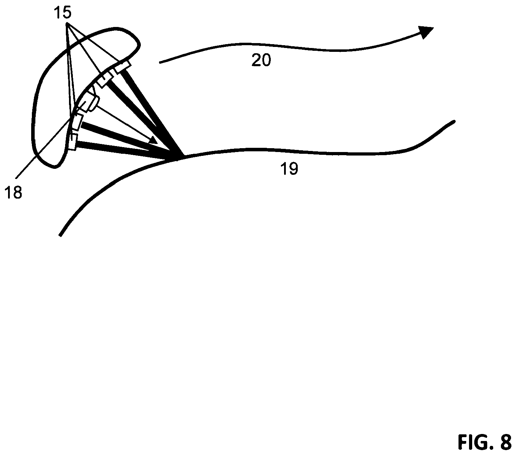

Um verschieden positionierte Muster zu erzeugen, können mehrere Lichtspotstränge 15 leicht versetzt nebeneinander angeordnet werden, wie das in Fig. 7 dargestellt ist. Auf der Objektoberfläche entstehen dann Lichtmuster 10 durch Anschalten einzelner Spots 16 bzw. Abschalten einzelner Lichtspots 17. Um eine Fokussierung der Lichtspots auf eine Linie zu erhalten, werden die Lichtspotstränge 15 ggf. leicht nach innen verdreht, wie das in Fig. 8 zu sehen ist. Dargestellt ist hier beispielhaft ein Sensor mit Zeilenkameras 18, Lichtspotsträngen 15, Messobjektoberfläche 19 und Scanbewegung 20.

Durch die vorgeschlagene Technik zur dezentralen Musterprojektion ist es möglich, dass System durch hinzufügen weiterer Kameras wie in Fig. 2 dargestellt, sowie entsprechende Beleuchtungssysteme, wie in den Fig. 3-5 dargestellt, in der Breite beliebig zu skalieren. Auf diese Art können die Erfordernisse bezüglich Messvolumen, Messauflösung und Messgeschwindigkeit des Verfahrens für viele 3D-Applikationen angepasst werden, ohne den Verfahrensansatz ändern zu müssen.

Mit allen drei Varianten zu Beleuchtung lässt sich das Messverfahren bei sehr hohen Zeilenfrequenzen betreiben, woraus sich neben der reinen Messgeschwindigkeit ein weiterer Vorteil ergibt. Durch eine kurze Integrationszeit, die sich bei hoher Zeilenfrequenz zwangsläufig ergibt, kann Bewegungsunschärfe auch bei sich schnell bewegenden Messobjekten weitgehend vermieden werden. Dadurch lässt sich z.B. auch die Oberfläche von Objekten auf laufenden Förderbändern sehr gut erfassen. Auch Messfehler bei Schwingungen können weitgehend vermieden werden, da eine Bewegungsunschärfe sich erst bei einer entsprechend hohen Frequenzen der Messobjektoberfläche bemerkbar machen kann. Bei hohen Frequenzen ist allerdings im Allgemeinen die Amplitude der Schwingung so gering dass sie keine Auswirkungen mehr auf die Messgenauigkeit hat. Das ist ein wesentlicher Unterschied zu bekannten mehrschrittigen Verfahren mit Matrixkameras.

Neben den drei genannten Varianten zur Beleuchtung sind auch andere Konstruktionen möglich. Dynamische Lichtmuster können auch durch die Projektion über bewegte Spiegel generiert werden. Die Muster können auch mit Hilfe spezieller Lichtquellen, z.B. mit Lasern, erzeugt werden. Des Weiteren ist zu bemerken, dass die Musterfolgen nicht reproduzierbar sein müssen. Die Generierung der Muster kann auch über stochastische Verfahren erfolgen. Beispielsweise können Muster durch Ausnutzung der Eigentextur der Beleuchtungsquelle oder durch Artefakte der Beleuchtungsquelle selbst oder im Projektionsprozess erzeugt werden. Im optischen Messverfahren muss das entsprechend berücksichtigt werden.

Das Messverfahren lässt sich | in einem nicht beanspruchten Beispiel prinzipiell auch mit nur einer Kamera anwenden, wobei dann aber eine spezielle Kalibrierung der Beleuchtung erforderlich ist. Eine Möglichkeit zur Kalibrierung ist es, die Form der Lichtmuster in Abhängigkeit ihrer räumlichen Position zu erfassen und in einer Lookup-Tabelle abzulegen. Bei der eigentlichen Messung wird dann aus der erfassten Form der Lichtmuster über die Lookup-Tabelle auf die Tiefeninformation geschlossen.

Weitere Möglichkeiten zur Anwendung des Messverfahrens bieten Konstruktionen mit Strahlteileroptik. Hierbei wird der Strahlengang bei der Bilderfassung so manipuliert, dass das Bild einer Kamera über verschiedene reale oder virtuelle Projektionszentren 1 entsteht, und so eine Triangulation zur Berechnung von 3D-Punkten ermöglicht wird.

Das Verfahren lässt sich auch im Sinne deflektometrischer Messprinzipien einsetzen. Dabei wird die Beleuchtung so eingesetzt, dass der spekulare Anteil der Reflektion auf der Oberfläche von den Kameras aufgenommen wird und die Grundlage zur 3D-Oberflächenrekonstruktion liefert.

Für deflektometrische Anwendungen kann ferner das Muster zunächst auf eine diffus reflektierende Oberfläche (z.B. Mattscheibe, Leinwand) projiziert werden und anschließend das Spiegelbild dieser beleuchteten Hilfsoberfläche auf der Objektoberfläche indirekt durch die Kameras aufgenommen und ausgewertet werden.

Zusammenfassend gilt es festzuhalten, dass die Erfindung eine Vorrichtung und ein Verfahren betrifft, wonach durch berührungsloses Abscannen von Oberflächen die 3D-Form (Relief, Struktur, Textur, etc.) der Oberfläche zeilenweise rekonstruiert werden kann. Eingesetzt wird die Erfindung insbesondere in Bereichen, in denen die Notwendigkeit besteht, große Oberflächen mit hoher Genauigkeit und hoher Geschwindigkeit in Form und Textur zu erfassen. Insbesondere eignet sich die Erfindung zur Anwendung im Bereich der Oberflächenprüftechnik. Durch einen kontinuierlichen Scannprozess ist es möglich, bei einem entsprechenden Produktionsprozess eine Endlosprüfung im Echtzeitbetrieb durchzuführen. Des Weiteren kann durch eine Verkettung mehrerer Zeilenkameras die Messeinrichtung auf beliebige Scannbreiten skaliert werden.

Hinsichtlich weiterer vorteilhafter Ausgestaltungen der erfindungsgemäßen Lehre sei zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Lehre lediglich zur Er-örterung der beanspruchten Lehre dienen, diese jedoch nicht auf die Ausführungsbeispiele einschränken.

**Bezugszeichenliste**

1 Projektionszentrum
2 Sensorzeile
3 Oberflächenpunkt
4 Lichtmuster, Objektoberfläche
5 programmierbarer Projektor
6 Projektoren (eingeschaltet)
7 Projektoren (ausgeschaltet)
8 Beleuchtung
9 Lichtspot
10 Lichtmuster
11 Messobjektoberfläche
12 LED
13 Reflektor
14 Optik
15 Lichtspotstrang
16 Spot (eingeschaltet)
17 Spot (ausgeschaltet)
18 Zeilenkamera
19 Messobjektoberfläche
20 Scanbewegung

**Patentansprüche**

1. Verfahren zur Bilderfassung einer vorzugsweise strukturierten Oberfläche (3, 19) eines Objekts, unter Verwendung mindestens zweier Zeilenkameras (2, 18) zum Scannen der Oberfläche (3, 19), wobei während der Bilderfassung eine Relativbewegung zwischen den Zeilenkameras (2, 18) und der Oberfläche (3, 19) erfolgt, wobei die Oberfläche (3, 19) strukturiert beleuchtet wird und wobei eine zeitliche und räumliche Auswertung aufgenommener Bilder zur Rekonstruktion der Oberfläche (3, 19) erfolgt, wobei anhand der zeitlichen und räumlichen Auswertung der einzelnen Bilder über Algorithmen korrespondierende Bildpunkte ermittelt werden, die gemeinsam mit der Abbildungsfunktion eine Triangulation von Oberflächenpunkten (3) ermöglichen, wobei bei zeitveränderlicher Projektion von Lichtmustern (10) eine zeilenweise Änderung der Lichtmuster (10) in zwei der Zeilenkameras (2, 18) ortsgebunden korreliert und wobei die Aufnahme der Oberfläche zeilenweise bei wechselnder Musterprojektion erfolgt.

**2.** Verfahren nach Anspruch 1, **dadurch gekennzeichnet, dass** die zeitliche und räumliche Auswertung unter Berücksichtigung der Relativbewegung zwischen den Zeilenkameras (2, 18) und der Oberfläche (3, 19) erfolgt.

**3.** Verfahren nach Anspruch 1 oder 2, **dadurch gekennzeichnet, dass** die strukturierte Beleuchtung von mehreren Lichtquellen (6, 7), vorzugsweise von Musterprojektoren (6, 7), erzeugt wird, die parallel zueinander angeordnet sind, wobei einzelne Lichtmuster (10) einander überlagern können, wobei vorzugsweise den Lichtquellen (6, 7) eine optische Einrichtung nachgeordnet ist, die eine Konstanz der Lichtmuster (10) über einen vorzugsweise definierbaren Tiefenbereich hinweg gewährleistet.

**4.** Verfahren nach einem der Ansprüche 1 bis 3, **dadurch gekennzeichnet, dass** statische Lichtmuster (10) projiziert werden, wobei unterschiedliche Lichtmuster (10) durch vorzugsweise schnelles Ein- und Ausschalten der Lichtquellen bzw. Musterprojektoren, d.h. durch unterschiedliche Überlagerungen der einzelnen Lichtmuster (10), erzeugt werden und/oder dass die Lichtmuster und/oder die zeitliche Folge der Lichtmuster programmierbar ist.

**5.** Verfahren nach einem der Ansprüche 1 bis 4, **dadurch gekennzeichnet, dass** die strukturierte Beleuchtung aus einzelnen LED-Spots zusammengesetzt wird, wobei unterschiedliche Lichtmuster (10) durch vorzugsweise direktes Ansteuern der einzelnen LEDs generiert werden.

**6.** Verfahren nach einem der Ansprüche 1 bis 5, **dadurch gekennzeichnet, dass** die Aufnahme der Oberfläche derart erfolgt, dass sich für jeden aufgenommenen Bildpunkt (Pixel) spezifische Grauwertfolgen ergeben, die photogrammetrisch ausgewertet werden, wobei korrespondierende Bildpunkte über eine Korrelationsfunktion anhand der spezifischen Grauwertfolgen aufgefunden werden und wobei vorzugsweise die Korrelation der Grauwertfolgen in Kombination mit einem Phasenshift-Algorithmus angewandt wird.

**7.** Verfahren nach einem der Ansprüche 1 bis 6, **dadurch gekennzeichnet, dass** zur Rekonstruktion der Oberfläche eine Abbildungsfunktion dient, die unter Berücksichtigung der Relativbewegung der Zeilenkameras (2, 18) und/oder des Objekts für jedes Bild bzw. für jeden Bildpunkt einen Sehstrahl im Messvolumen liefert, wobei vorzugsweise die Abbildungsfunktion zeitabhängig definiert wird.

**8.** Verfahren nach einem der Ansprüche 1 bis 7, **dadurch gekennzeichnet, dass** die Zeilenkameras (2, 18) derart angeordnet und ausgerichtet werden, dass die Projektionszentren und die Sensorzeilen aller Zeilenkameras (2, 18) eine gemeinsame Ebene aufspannen, wobei vorzugsweise dazu mit den Kameras (2, 18) ein geeignetes gemeinsames Muster, bspw. das Kalibrierfeld, aufgenommen wird und wobei weiter vorzugsweise durch iterative Anpassung der Kameraorientierung die Kameras (2, 18) so eingestellt werden, dass beide Kameras (2, 18) das Muster an der gleichen Position aufnehmen.

**9.** Verfahren nach einem der Ansprüche 1 bis 8, **dadurch gekennzeichnet, dass** korrespondierende Bildpunkte, d.h. Pixel, die denselben Oberflächenpunkt abbilden, aufgrund einer kolinearen Ausrichtung der Zeilenkameras (2, 18) zum gleichen Zeitpunkt erfasst werden.

**10.** Verfahren nach einem der Ansprüche 1 bis 9 **gekennzeichnet durch** die Anwendung deflektometrischer Messprinzipien, wobei dabei die Beleuchtung so eingesetzt wird, dass der spekulare Anteil der Reflektion auf der Oberfläche von den Kameras (2, 18) aufgenommen wird und die Grundlage zur Bilderfassung liefert.

**11.** Verfahren nach einem der Ansprüche 1 bis 10, **dadurch gekennzeichnet, dass** die Beleuchtung ggf. unter Hinzunahme zusätzlicher streuender (Hilfs-) Oberflächen so eingesetzt wird, dass der spekulare Anteil der Reflexion auf der aufzunehmenden Objektoberfläche von den Kameras (2, 18) erfasst wird und die Grundlage zur Bilderfassung liefert, und/oder
dass die Lichtmuster (10) durch die Projektion über bewegte Spiegel, mit Hilfe spezieller Lichtquellen wie beispielsweise Laser, oder durch stochastische Verfahren erzeugt werden.

**12.** Vorrichtung zur Bilderfassung einer vorzugsweise strukturierten Oberfläche (3, 19) eines Objekts, eingerichtet zur Anwendung des Verfahrens nach einem der Ansprüche 1 bis 11, mit mindestens zwei Zeilenkameras (2, 18) und mindestens einer Lichtquelle zur zeitveränderlichen strukturierten Beleuchtung der Oberfläche (3, 19), wobei während der Bilderfassung eine Relativbewegung zwischen den Zeilenkameras (2, 18) und der Oberfläche (3, 19) erfolgt, wobei weiterhin Mittel für eine zeitliche und räumliche Auswertung aufgenommener Bilder zur Rekonstruktion der Oberfläche (3, 19) vorgesehen sind, wobei die Mittel eingerichtet sind, anhand der zeitlichen und räumlichen Auswertung der einzelnen Bilder über Algorithmen korrespondierende Bildpunkte zu ermitteln, die gemeinsam mit der Abbildungsfunktion eine Triangulation von Oberflächenpunkten (3) ermöglichen, wobei bei zeitveränderlicher Projektion von Lichtmustern (10) durch die Lichtquelle eine zeilenweise Änderung der Lichtmuster (10) in zwei der Zeilenkameras (2, 18) ortsgebunden korreliert und wobei die Vorrichtung dazu eingerichtet ist, die Aufnahme der Oberfläche zeilenweise bei wechselnder Musterprojektion vorzunehmen.

13. Vorrichtung nach Anspruch 12, **dadurch gekennzeichnet, dass** zwei, drei oder mehrere Zeilenkameras (2, 18) ein Kamerasystem bilden, wobei vorzugsweise die Kameras (2, 18) kolinear bzw. coplanar ausgerichtet sind oder die Zeilenkameras (2, 18) derart angeordnet und ausgerichtet sind, dass die Projektionszentren und die Sensorzeilen aller Zeilenkameras (2, 18) eine gemeinsame Ebene aufspannen.

14. Vorrichtung nach Anspruch 12 oder 13, **dadurch gekennzeichnet, dass** zur Erzeugung der strukturierten Beleuchtung Laser oder LED-Elemente verwendet werden.

15. Vorrichtung nach einem der Ansprüche 12 bis 14, **dadurch gekennzeichnet, dass** die Mittel für eine zeitliche und räumliche Auswertung aufgenommener Bilder zur Berücksichtigung der Relativbewegung zwischen den Zeilenkameras (2, 18) und der Oberfläche (3, 19) eingerichtet sind.

## Claims

1. Method for image acquisition of a preferably structured surface (3, 19) of an object using at least two line scan cameras (2, 18) for scanning the surface (3, 19), wherein during the image acquisition a relative movement between the line scan cameras (2, 18) and the surface (3, 19) is carried out, wherein the surface (3, 19) is illuminated in a structured manner and wherein a temporal and spatial evaluation of recorded images is carried out for reconstructing the surface (3, 19), wherein based on the temporal and spatial evaluation of the individual images there are established corresponding pixels by means of algorithms which together with the imaging function enable a triangulation of surface points (3), wherein, with time-variable projection of light patterns (10), a line-by-line change of the light patterns (10) in two of the line scan cameras (2, 18) is correlated in a site-specific manner, and wherein the recording of the surface is carried out on a line-by-line basis with a changing pattern projection.

2. Method according to claim 1, **characterised in that** the temporal and spatial evaluation is carried out taking into account the relative movement between the line scan cameras (2, 18) and the surface (3, 19).

3. Method according to claim 1 or 2, **characterised in that** the structured illumination of a plurality of light sources (6, 7) is preferably produced by pattern projectors (6, 7), which are arranged parallel with each other, wherein individual light patterns (10) can be superimposed on each other, wherein there is preferably arranged downstream of the light sources (6, 7) an optical device which ensures a consistency of the light patterns (1) over a preferably definable depth range.

4. Method according to any one of claims 1 to 3, **characterised in that** static light patterns (10) are projected, wherein different light patterns (10) are produced by means of preferably rapid switching on and off of the light sources or pattern projectors, that is to say, by means of different superimpositions of the individual light patterns (10), and/or **in that** the light patterns and/or the time sequence of the light patterns can be programmed.

5. Method according to any one of claims 1 to 4, **characterised in that** the structured illumination is composed of individual LED spots, wherein different light patterns (10) are generated by preferably directly controlling the individual LEDs.

6. Method according to any one of claims 1 to 5, **characterised in that** the recording of the surface is carried out in such a manner that for each recorded pixel specific grey value sequences are produced and are photogrammetrically evaluated, wherein corresponding pixels are located by means of a correlation function with reference to the specific grey value sequences and wherein the correlation of the grey value sequences is preferably used in combination with a phase-shift algorithm.

7. Method according to any one of claims 1 to 6, **characterised in that** an imaging function is used to reconstruct the surface and is defined taking into account the relative movement of the line scan cameras (2, 18) and/or the object provides for each image or for each pixel a visual line in the measurement volume, wherein the imaging function is preferably defined in a time-dependent manner.

8.  Method according to any one of claims 1 to 7, **characterised in that** the line scan cameras (2, 18) are arranged and orientated in such a manner that the projection centres and the sensor lines of all the line scan cameras (2, 18) define a common plane, wherein using the cameras (2, 18) a suitable common pattern, for example, the calibration field, is preferably recorded to this end, and wherein in a further preferable manner by means of iterative adaptation of the camera orientation, the cameras (2, 18) are adjusted in such a manner that both cameras (2, 18) record the pattern at the same position.

9.  Method according to any one of claims 1 to 8, **characterised in that** corresponding pixels, that is to say, pixels which image the same surface point, are acquired at the same time based on a colinear orientation of the line scan cameras (2, 18).

10. Method according to any one of claims 1 to 9, **characterised by** the use of deflectometric measurement principles, wherein the illumination is used in such a manner that the specular portion of the reflection on the surface is recorded by the cameras (2, 18) and provides the basis for the image acquisition.

11. Method according to any one of claims 1 to 10, **characterised in that** the illumination is used where applicable with the addition of additional scattering (auxiliary) surfaces in such a manner that the specular portion of the reflection on the object surface which is intended to be recorded is acquired by the cameras (2, 18) and provides the basis for the image acquisition, and/or in that the light patterns (10) are produced by means of the projection via moving mirrors, using special light sources, such as, for example, lasers, or by means of stochastic methods.

12. Device for image acquisition of a preferably structured surface (3, 19) of an object configured for use of the method according to any one of claims 1 to 11, having at least two line scan cameras (2, 18) and at least one light source for time-variable structured illumination of the surface (3, 19), wherein during the image acquisition a relative movement is carried out between the line scan cameras (2, 18) and the surface (3, 19), wherein means for temporal and spatial evaluation of recorded images for reconstructing the surface (3, 19) are further provided, wherein the means are configured to establish corresponding pixels based on the temporal and spatial evaluation of the individual images by means of algorithms which together with the imaging function enable a triangulation of surface points (3), wherein with time-variable projection of light patterns (10) by the light source a line-by-line change of the light patterns (10) in two of the line scan cameras (2, 18) is correlated in a site-specific manner, and wherein the device is configured to carry out the recording of the surface on a line-by-line basis with a changing pattern projection.

13. Device according to claim 12, **characterised in that** two, three or more line scan cameras (2, 18) form a camera system, wherein the cameras (2, 18) are preferably orientated in a colinear or coplanar manner or the line scan cameras (2, 18) are arranged and orientated in such a manner that the projection centres and the sensor lines of all the line scan cameras (2, 18) define a common plane.

14. Device according to claim 12 or 13, **characterised in that** lasers or LED elements are used to produce the structured illumination.

15. Device according to any one of claims 12 to 14, **characterised in that** the means for temporal and spatial evaluation of recorded images are configured to take into account the relative movement between the line cameras (2, 18) and the surface (3, 19).

**Revendications**

1.  Procédé de détection d'images d'une surface de préférence structurée (3, 19) d'un objet, à l'aide d'au moins deux caméras linéaires (2, 18) pour le balayage de la surface (3, 19), dans lequel, pendant la détection d'images, un mouvement relatif entre les caméras linéaires (2, 18) et la surface (3, 19) a lieu, dans lequel la surface (3, 19) est éclairée de manière structurée et dans lequel une analyse temporelle et spatiale des images prises a lieu pour la reconstruction de la surface (3, 19), dans lequel, à l'aide de l'analyse temporelle et spatiale des différentes images, par l'intermédiaire d'algorithmes, sont déterminés des points d'images correspondants qui permettent ensemble, avec la fonction de représentation, une triangulation des points de la surface (3), dans lequel, lors d'une projection variable au cours du temps de motifs lumineux (10), une modification linéaire des motifs lumineux (10) dans deux des caméras (2, 18) est corrélée de manière localisée et dans lequel la prise de vue de la surface a lieu de manière linéaire avec une projection de motifs variables.

**2.** Procédé selon la revendication 1, **caractérisé en ce que** l'analyse temporelle et spatiale a lieu en tenant compte du mouvement relatif entre les caméras linéaires (2, 18) et la surface (3, 19).

**3.** Procédé selon la revendication 1 ou 2, **caractérisé en ce que** l'éclairage structuré est généré par plusieurs sources de lumière (6, 7), de préférence par des projecteurs de motifs (6, 7) qui sont disposés parallèlement entre eux, dans lequel certains motifs lumineux (10) peuvent se superposer, dans lequel de préférence, après les sources de lumière (6, 7), est disposé un dispositif optique qui garantit une constance des motifs lumineux (10) sur une zone de profondeur, de préférence définissable.

**4.** Procédé selon l'une des revendications 1 à 3, **caractérisé en ce que** des motifs lumineux statiques (10) sont projetés, dans lequel différents motifs lumineux (10) sont générés par une mise en marche et un arrêt, de préférence rapide, des sources de lumière resp. projecteurs de motifs, c'est-à-dire par différentes superpositions des différents motifs lumineux (10), et/ou **en ce que** les motifs lumineux et/ou la série temporelle des motifs lumineux est programmable.

**5.** Procédé selon l'une des revendications 1 à 4, **caractérisé en ce que** l'éclairage structuré est constitué de différents spots à LED, dans lequel certains motifs lumineux (10) sont générés par un contrôle, de préférence direct, des différentes LED.

**6.** Procédé selon l'une des revendications 1 à 5, **caractérisé en ce que** la prise de vue de la surface a lieu de façon à ce que, pour chaque point d'image (pixel) enregistré, il en résulte des séries de niveaux de gris spécifiques qui sont évalués de manière photogrammétrique, dans lequel des points d'images correspondants sont découverts par l'intermédiaire d'une fonction de corrélation à l'aide des séries de niveaux de gris spécifiques et dans lequel, de préférence, la corrélation des séries de niveaux de gris est appliquée en combinaison avec un algorithme à décalage de phase.

**7.** Procédé selon l'une des revendications 1 à 6, **caractérisé en ce que**, pour la reconstruction de la surface, on utilise une fonction de représentation qui, en tenant compte du mouvement relatif des caméras linéaires (2, 18) et/ou de l'objet, pour chaque image resp. pour chaque point d'image, délivre un rayon visuel dans le volume de mesure, dans lequel de préférence la fonction de représentation est définie en fonction du temps.

**8.** Procédé selon l'une des revendications 1 à 7, **caractérisé en ce que** les caméras linéaires (2, 18) sont disposées et orientées de façon à ce que les centres de projection et les lignes de capteurs de toutes les caméras linéaires (2, 18) définissent un plan commun, dans lequel de préférence, avec les caméras (2, 18), un motif commun adapté, par exemple le champ de calibrage, est enregistré et dans lequel, encore plus de préférence ; par adaptation itérative de l'orientation des caméras, les caméras (2, 18) sont réglées de façon à ce que les deux caméras (2, 18) enregistrent le motif à la même position.

**9.** Procédé selon l'une des revendications 1 à 8, **caractérisé en ce que** des points d'images, c'est-à-dire des pixels, correspondants, qui représentent le même point de surface sont détectés au même moment grâce à une orientation colinéaire des caméras linéaires (2, 18).

**10.** Procédé selon l'une des revendications 1 à 9, **caractérisé par** l'application de principes de mesure déflectométriques, dans lequel l'éclairage est utilisé de façon à ce que la part spéculaire de la réflexion sur la surface est enregistrée par les caméras (2, 18) et fournit la base pour la détection d'images.

**11.** Procédé selon l'une des revendications 1 à 10, **caractérisé en ce que** l'éclairage est utilisé, le cas échéant en ajoutant des surfaces (auxiliaires) de diffusion supplémentaires, de façon à ce que la part spéculaire de la réflexion sur la surface d'objet à enregistrer est détectée par les caméras (2, 18) et fournit la base pour la détection d'images et/ou
**en ce que** les motifs lumineux (10) sont générés par la projection, par l'intermédiaire de miroirs mobiles, à l'aide de sources de lumière spéciales, par exemple un laser, ou par des procédés stochastiques.

**12.** Dispositif de détection d'images d'une surface de préférence structurée (3, 19) d'un objet, conçu pour l'application du procédé selon l'une des revendications 1 à 11, avec au moins deux caméras linéaires (2, 18) et au moins une source de lumière pour l'éclairage structuré variable dans le temps de la surface (3, 19), dans lequel, pendant la détection d'images, un mouvement relatif entre les caméras linéaires (2, 18) et la surface (3, 19) a lieu, dans lequel en outre des moyens pour une analyse temporelle et spatiale des images enregistrées sont prévus pour la reconstruction de la surface (3, 19), dans lequel les moyens sont conçus pour déterminer, à l'aide de l'analyse temporelle et spatiale des différentes images, par l'intermédiaire d'algorithmes, des points d'images correspondants qui permettent, conjointement avec la fonction de représentation, une triangulation des points de la surface (3), dans lequel, lors d'une projection, variable dans le temps, de motifs lumineux (10) par la source de lumière, une modification linéaire des motifs lumineux (10) est corrélée de manière locale dans deux des caméras linéaires (2, 18) et dans lequel le dispositif est conçu pour effectuer l'enregistrement de la surface ligne par ligne avec une projection de motifs variables.

**13.** Dispositif selon la revendication 12, **caractérisé en ce que** deux, trois caméras linéaires (2, 18) ou plus constituent un système de caméras, dans lequel de préférence les caméras (2, 18) sont orientées de manière colinéaire resp. coplanaire ou les caméras linéaires (2, 18) sont disposées et orientées de façon à ce que les centres de projection et les lignes de capteurs de toutes les caméras linéaires (2, 18) définissent un plan commun.

**14.** Dispositif selon la revendication 12 ou 13, **caractérisé en ce que**, pour la production de l'éclairage structuré, un laser ou des éléments à LED sont utilisés.

**15.** Dispositif selon l'une des revendications 12 à 14, **caractérisé en ce que** les moyens pour une analyse temporelle et spatiale des images enregistrées sont conçus pour tenir compte du mouvement relatif entre les caméras linéaires (2, 18) et la surface (3, 19).

FIG. 1

FIG. 2

(5)

(4)

**FIG. 3**

**FIG. 4**

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19738480 C1
- DE 4402414 C2
- DE 19928341 C2
- US 4834530 A
- DE 102007034689 A1
- JP 2004117186 A

**In der Beschreibung aufgeführte Nicht-Patentliteratur**

- **S. SON ; H. PARK ; K. H. LEE.** Automated laser scanning system for reverse engineering and inspection. *International Journal of Machine Tools and Manufacture,* Juni 2002, vol. 42 (8), 889-897
- Recognition of Polyhedrons with a Range Finder. **YOSHIAKI ; MOTOI SUWA.** Proceedings of the 2nd International Joint Conference on Artificial Intelligence, (London, UK, September, 1971), Conference Proceedings. 1971, 80-87
- **LILIENBLUM E. ; MICHAELIS, B.** Optical 3d surface reconstruction by a multi-period phase shift method. *Journal of Computers (JCP),* April 2007, vol. 2 (2), 73-83
- **ALBRECHT, PETER ; MICHAELIS, BERND.** Improvement of the Spatial Resolution of an Optical 3-D Measurement Procedure. *IEEE Transactions on Instrumentation and Measurement,* 1998, vol. 47, 158-162
- **KANADE, T. ; OKUTOMI, M.** A stereo matching algorithm with an adaptive window: theory and experiment. *IEEE Transactions on Pattern Analysis and Machine Intelligence,* 1994, vol. 16 (9), 920-932
- **VALKENBURG, R. J. ; MCLVOR, A. M.** Accurate 3d measurement using a structured light system. *Image and Vision Computing,* 1998, vol. 16 (2), 99-110
- Optische 3D-Messtechnik: Präzise Gestaltvermessung mit einem erweiterten Streifenprojektionsverfahren. **WIORA, G.** Dissertation. University Heidelberg, 2001